# EUROPEAN PATENT SPECIFICATION

(11) **EP 3 795 439 B1**
(45) Date of publication and mention of the grant of the patent: **08.06.2022**
(21) Application number: 19198872.4
(22) Date of filing: 23.09.2019
(51) Int. Cl.: B60T 15/04, G05G 1/04, G05G 5/06, G05G 1/06

(54) **HAND BRAKE ASSEMBLY WITH AN ANTI-ROTATIONAL LOCK**
HANDBREMSANORDNUNG MIT VERDREHSICHERER ARRETIERUNG
ENSEMBLE DE FREIN À MAIN DOTÉ D'UN VERROUILLAGE ANTIROTATION

(43) Date of publication of application: 24.03.2021
(73) Proprietor: ZF CV Systems Europe BV, 1170 Brussels (BE)
(72) Inventor: Drelich, Lukasz, 42-215 Czestochowa (PL); Swiatek, Pawel, 54-616 Wroclaw (PL)
(74) Representative: Rabe, Dirk-Heinrich

(56) References cited:
- EP-A2- 1 900 583
- DE-A1- 19 831 195
- DE-U1- 8 105 742

## Description

### FIELD OF THE INVENTION

The present invention relates to the field of hand brake valves used in vehicles for applying brakes, in particular parking brakes. The present invention particularly finds application in trucks, heavy trucks and work vehicles where said hand brake valves are provided at a driver's cabin for engaging the parking brakes. Specifically, the present invention concerns an assembly for the hand brake valve.

### BACKGROUND OF THE INVENTION

Hand brake valves are known to include a metal rod, a handle connected to the metal rod and other components which may facilitate the change of position of the brake valve between e.g., 'engaged' to 'disengaged' position or vice versa. In particular, the handle is provided above the metal rod. See, for instance, Figure 1 of a German patent publication "DE 3346018 A1" where handle '14' is shown to be provided above rod '6'.

After prolonged use of such hand brake valves, and due to wear and tear, the handle of the brake valve may get displaced or undergo relative movements with respect to e.g., the metal rod. Needless to say, such relative movements between the metal rod and the handle may not be desirable. In other words, the torque or work required to displace the handle in relation to the metal rod needs to properly transferred by the operator to the further components beneath the metal rod to apply the brakes and at the same time the operator needs to feel the 'feedback' in a precise manner.

While the movement of the handle in relation to the metal rod per se is undesired, but in certain conditions it may result in an unreliable operation of the hand brake valve and compromise on the safety of the application of the parking brakes. For instance, in faulty situations the handle the relative movements may result in possible loss of locking function of the hand brake valves (i.e., parking position not stable). In some other conditions, the driver may be unaware if the assembly between the handle and the metal rod is clearly rendered broken or there is no friction between them. Needless to mention, this is unsafe as the engagement of the hand brake valve and the consequent change in the position of the parking brake needs to be guaranteed and the operator needs to be sure about the operation. An assembly of a handle mounted to a rod of non-circular cross-section is disclosed in German Utility Pattern DE 8105742 U. An assembly for a hand brake valve comprising a handle that is axially movable on a rod is disclosed in European Patent Application EP 1 900 583 A2.

In the existing arts, one of the modes of addressing the above mentioned problems is to increase the regions of overlap between the handle and the metal rod. However, such solutions have generally not been found substantially adequate.

The present invention is directed to address, among others, the above mentioned problem and at the same time to provide an improved hand brake valve for use in the vehicles.

### SUMMARY OF THE INVENTION

In accordance with an embodiment, an assembly for a hand brake valve is provided. The assembly comprises a metal rod with a non-circular external surface, a handle insert at least partially surrounding the non-circular external surface the metal rod, and, the assembly comprises structural means that is configured to prevent any rotational movement between the handle insert and at least the metal rod. The technical advantage of having the structural means so configured to prevent the relative rotational movement is that to guarantee the actuation force applied by the operator of the hand brake valve is transferred to further components in assembly. Uncertainties caused due to the relative rotation between insert and rod are prevented such that e.g., the operator of the hand brake valve may not be misled that the proper and/or complete actuation of the hand brake valve has occurred and/or the force applied by the operator to the hand brake valve is transferred in a targeted manner within e.g., the assembly of the hand brake valve.

For instance, as mentioned above, in certain scenarios the torque required to rotate the handle insert or generally handle could be around approximately of the order of 5Nm (or 5 newton meter). It should be noted that this value is not to be considered as a definitive value. It has been provided only for the sake of understanding of the underlying invention. Due to the usage of the structural means according to the present invention, the torque required to rotate the handle has been increased. As a consequence, this renders the assembly of the device rigid and increases its robustness and prevents e.g., relative rotational movement or any other movement between the metal rod and e.g., the handle insert.

In accordance with the same as the above embodiment or another embodiment, relating to the assembly for the hand brake valve, the structural means is further configured to allow a rectilinear movement of the handle insert in relation to at least the metal rod. The technical advantage of providing, for instance, the rectilinear movement is to enable further actuation positions of the hand brake valve. For instance, movement of the handle insert linearly in 'up' and 'down' directions can actuate states of engaging the hand brake valve.

In accordance with yet another embodiment, the structural means comprises a pin, and a socket for receiving the pin. In the above-mentioned embodiment, the socket extends completely through the metal rod and the handle insert. In particular, to the extent the socket extends completely through the metal rod and the handle insert, the socket is longitudinally arranged such that the pin is capable of vertically sliding in a direction parallel to a vertical axis 'Y' within the socket. A skilled person would recognized that the technical advantage of the present embodiment with the mechanism of using the pin and the socket is to ensure the prevention of any rotational movement between the handle insert and at least the metal rod and at the same time enabling the rectilinear movement of the handle insert in relation to at least the metal rod.

Further, in an embodiment, the pin is in physical contact with at least the metal rod and the handle insert and wherein the pin has a length that is lesser than an external diameter at a cross-sectional portion (A-A) of the handle insert. The technical consequence is the pin with mentioned length is commensurate to the requirement of not only preventing the rotational movement between at least the handle insert and the metal rod, but also be able to freely vertically slide within the socket along axis 'Y' and to maintain its horizontal orientation as restricted by dimensions of the socket (note: the socket passes through the metal rod and the insert).

Furthermore, the structural means, in one or more of the above-mentioned embodiments, comprises a bush that has an internal surface matching the dimensions of the non-circular external surface of the metal rod. This is an alternative, as would also be apparent from the description below, to the pin and socket arrangement as explained in one or more of the above embodiments. The technical advantage of the using the bush is such that it enables the rectilinear movement between the handle insert and at least the metal rod, but prevents any relative rotational movement between them.

Still further, the bush is made of metal based material, and preferably the handle insert is overmolded to the bush. In other words, the bush is placed below as e.g., a substrate as the molten material that forms part of the handle insert is allowed to be formed above the bush. The process of overmolding is, for instance, known to the person skilled in the art. The technical advantages of the overmolding process are well known when the materials such as metal is assigned for the bush and plastic assigned for the handle insert.

In accordance with the present invention, the assembly further comprises an external shell which is positively coupled to the handle insert, wherein the external shell encloses at least the partially the handle insert. The external shell has the technical purpose of providing right amount of the grip to the operator of the hand brake valve and also provided to function as a cover to the other components of the assembly.

In an embodiment, the socket preferably extends through the external shell, and to the extent the socket extends through the external shell, the socket is shaped to at least approximately match the shape of the pin. The technical purpose is to enable the insertion of the pin during the assembly so that pin is positioned within the socket that passes completely through the metal rod and the handle insert.

In yet another embodiment, the socket extends through the external shell such that it is configured to facilitate introduction of the pin during an assembly process of the assembly for a hand brake assembly.

In accordance with the present invention, the external shell is positively coupled to the handle insert such that there is no relative rotational movement possible between the external shell and the handle insert. The technical advantage is to facilitate the operator of the hand brake valve can have proper feedback and grip when, e.g., the metal rod is activated for shifting the parking brake position from 'engaged' to 'disengaged'.

In an exemplary embodiment of the present invention, in the assembly of one or more of the above listed embodiments, the external shell and the handle insert are configured to undergo a predetermined or a limited rectilinear movement in relation to the metal rod in a direction parallel to a vertical axis 'Y'. The technical effect of this feature is to realize the purpose of the utilizing the pin and socket arrangement or the bush arrangement in association with the other components of the assembly. For instance, the limited rectilinear movement mentioned in the current embodiment is to allow change in the position of e.g., the parking brake from the engaged to the disengaged and/or further operating conditions.

It is also clear that the assembly for the hand brake valve in vehicles as listed above can be used, in particular in trucks, for applying parking brakes.

Further, technical advantages of the structural features and/or components of the assembly of the hand brake valve are explained in conjunction with the detailed description.

### BRIEF DESCRIPTION OF THE ACCOMPANYING DRAWINGS

Fig 1a shows a cross-sectional view of an assembly for a hand brake valve in accordance with an embodiment of the present invention;
Fig 1b shows a cut section of an assembly for a hand brake valve explained in conjunction with Fig 1a, in accordance with an embodiment of the present invention;
Fig 1c shows a metal rod used in conjunction with an assembly for a hand brake valve in accordance with an embodiment of the present invention;
Fig 1d is cross-sectional view of a metal rod shown in conjunction with Fig 1c in accordance with an embodiment of the present invention;
Fig 1e illustrates an external shell of an assembly for a hand brake valve in accordance with an embodiment of the present invention;
Fig 1f is a cross-sectional view of an external shell illustrated in Fig 1e in accordance with an embodiment of the present invention;
Fig 2a shows a cross-sectional view of another assembly for a hand brake valve in accordance with another embodiment of the present invention; and
Fig 2b is a cut section of another assembly for a hand brake valve explained in conjunction with Fig 2a in accordance with another embodiment of the present invention.

### DETAILED DESCRIPTION OF THE ACCOMPANYING DRAWINGS

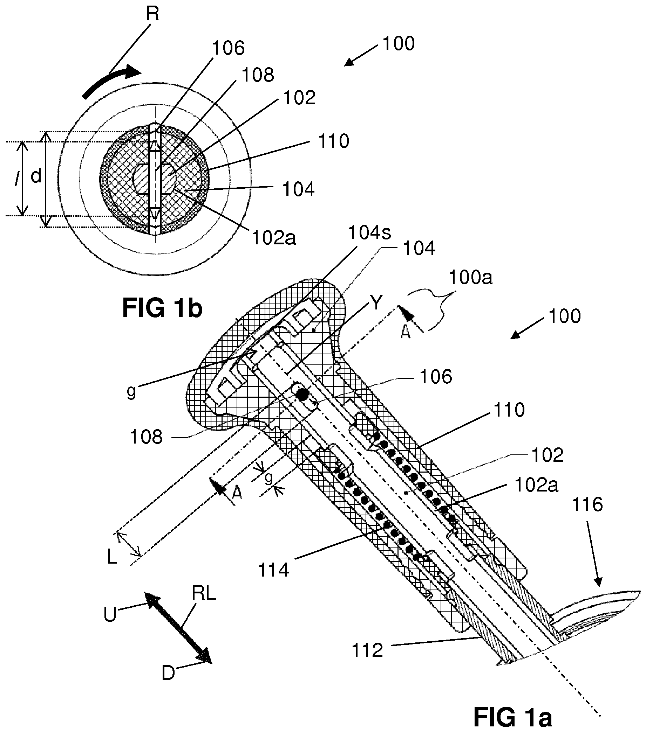

Fig 1a shows a cross-sectional view of an assembly 100 for a hand brake valve in accordance with an embodiment of the present invention.

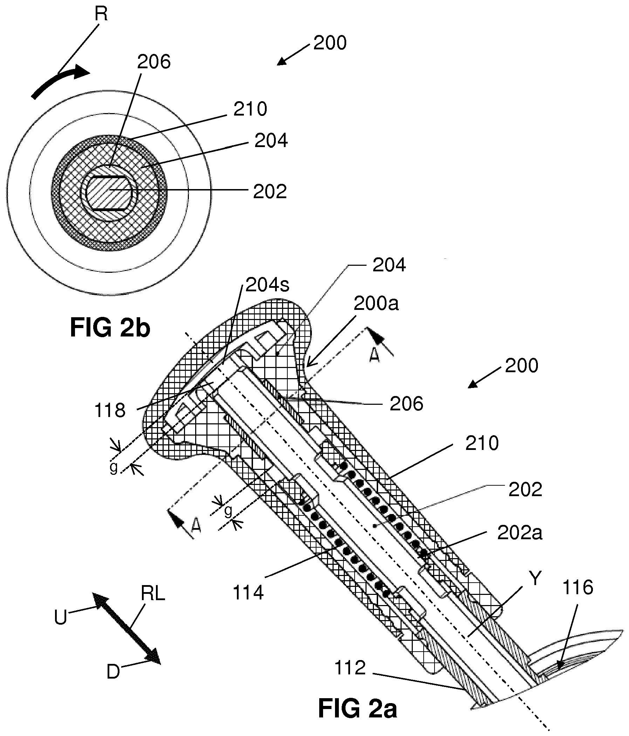

It is noted that a complete set of components that constitute the hand brake valve is not is not illustrated in the accompanying figures. Assembly 100 in addition to further components generally defines the hand brake valve, which may be utilized to actuate, for instance, the parking brakes of the vehicles. Said 'further components' are however believed not necessary for the understanding the subject-matter of the present invention. In any case, it is noted that assembly 100 illustrated in Figs. 1a to 1f and assembly 200 shown in Figs. 2a and 2b are both different variations and are part of the hand brake valve. In particular, in accordance with an exemplary illustration, assembly 100 and 200 are not only configured to move within a slot or track 116 (see Figs. 1a and 2a) to performing the functions of the hand brake valve, but also include 'linear' actuating options. Said linear actuating options are configured such that one or more components of assembly 100 or 200 are configured to linearly reciprocate in relation to rod 102 or 202 to e.g., engage or disengage the parking brakes.

Referring back to Fig 1a, said figure discloses an assembly 100 for a hand brake valve. Assembly 100 comprises a metal rod 102 with a non-circular external surface 102a, a handle insert 104 at least partially surrounding non-circular external surface 102a of metal rod 102. For instance, in Fig 1a, it may be apparent that handle insert 104 is snugly fit such that it partially or completely surrounds surface 102a of metal rod 102 (more clearly represented in cut-sectional view of Fig 1b). This is provided to "enable" the transfer of work from an operator of the hand brake valve to metal rod 116 without any twisting or turning between handle insert 104 and metal rod 102. A skilled person may however realize that such an assembly between handle insert 104 and metal rod 102 may wear out over the duration of usage of the hand brake valve. For illustration, it could be considered that handle insert 104 may be made of plastic based material. Due to the repeated usage and after a number of operating cycles of the hand brake valve, the plastic material of handle insert 104 wears out due to being in contact with "metal" rod 102 or due to the repeated impact force felt by handle insert 104 from "metal" rod 102. It is one of the objectives of the present invention to prevent an erosion of this positive assembly between metal rod 102 and handle insert 104 despite the repeated usage of the hand brake valve.

Consequently, assembly 100 of the present invention is provided with, among other elements, a structural means 100a that is configured to prevent any rotational movement (see 'R' in Fig 1b to understand what is meant with the term 'rotational') between handle insert 104 and at least metal rod 102. A skilled person would also envisage that one of the technical advantages of preventing any relative rotational movement between insert 104 and rod 102 is that to guarantee the actuation force applied by the operator of the hand brake valve is transferred to further components in assembly 100. Uncertainties caused due to the relative rotation between insert 104 and rod 102 are prevented such that e.g., the operator of the hand brake valve may not be misled that the proper and/or complete actuation of the hand brake valve has occurred and/or the force applied by the operator to the hand brake valve is transferred in a targeted manner within e.g., assembly 100 of the hand brake valve.

In accordance with the present embodiment, structural means 100a comprises a pin 108, and a socket 106 for receiving pin 108. The technical advantage of an arrangement for structural means 100a with pin 108 and socket is that it prevents any rotational movement between handle insert 104 and at least metal rod 102, but at the same time enables a rectilinear movement (see 'RL' in Fig 1a to understand what is meant by 'rectilinear'; such movement is parallel to axis 'Y' which also labeled in the same figure) of at least handle insert 104 in relation to at least metal rod 102. Such a technical advantage is clearly derivable from e.g., Figs 1a and 1b of the accompanying drawings.

As shown in e.g., Fig 1a, there exists gap 'g' generally between metal rod 102 and an internal surface 104s of insert 104. Said gap 'g' in association with the presence of length 'L' of socket 106 (see fig 1a) enables said rectilinear movement of handle insert 104 in relation to at least metal rod 102. As pin 108 movies within socket 106 of metal rod 102, said rectilinear movement of at least handle insert 104 in relation to at least metal rod 102 is facilitated. On the other hand, as shown in cut-sectional view of Fig 1b particularly, pin 108 extends through metal rod 102 and handle insert 104 so that any possibility of rotational movement between metal rod 102 and at least handle insert 104 is prevented.

In accordance with the present embodiment or another, in order to clearly define the enablement of the rectilinear movement, it is noted that socket 106 extends completely through metal rod 102 and handle insert 104, and to the extent socket 106 extends completely through metal rod 102 and handle insert 104, socket 106 is longitudinally arranged such that pin 108 is capable of vertically sliding in a direction parallel to a vertical axis 'Y' within socket 106.

Further, in accordance with a preferred embodiment, and as shown in Fig 1b, pin 108 is in physical contact with at least the metal rod 102 and handle insert 104 and said pin 108 has a length that is lesser than an external diameter at a cross-sectional portion (A-A) of handle insert 104. The technical consequence is that pin 108 with mentioned length is commensurate to the requirement of not only preventing the rotational movement (see reference sign 'R' in fig 1b to show what is meant by the term 'rotational') between at least handle insert 104 and metal rod 102, but also be able to freely vertically slide within socket 106 (which passes through metal rod 102 and insert 104) along axis 'Y' (see Fig 1a) and to maintain its horizontal orientation as restricted by dimensions of socket 106.

In accordance with the same as the above embodiment or another embodiment, structural means 100a is further configured to allow a rectilinear movement of handle insert 104 in relation to at least metal rod 102. The technical advantage of providing, for instance, the rectilinear movement is to enable further actuation positions of the hand brake valve that can be achieved through said rectilinear movement. For instance, the rectilinear movement of handle insert 104 in 'up' and 'down' directions can represent actuation states of engaging or disengaging the parking brake. In order to be further definite, see reference 'U' in fig 1a that is to be meant refer the direction 'up' and 'D' is meant to refer to the direction 'down'. Both of the movements 'up' and 'down' are part of e.g., the rectilinear movement 'RL', which is a movement with a direction that is also parallel to axis 'Y'. This illustration of up and down is provided in Fig 1a (also Fig 2a) in order to merely avoid rendering such terms indefinite. For another instance, the rectilinear movement that handle insert 104 is capable of, in particular in relation to metal rod 102 is derivable in view of a gap 'g' as labeled in Fig 1a.

As already explained above, the rectilinear movement in accordance with the embodiment associated with assembly 100 is facilitated by structural means 100a.

Fig 1b shows a cut section of assembly 100 for the hand brake valve explained in conjunction with Fig 1a, in accordance with an embodiment of the present invention. Said cut section of assembly 100 is marked at plane A-A in Fig 1a.

More importantly, the cut section of assembly 100 is provided to explain the arrangement of e.g., pin 108 in socket 106 in relation to other components of assembly 100. In the illustration of Fig 1b of the present embodiment, what is also derivable is, although socket 106 extends through metal rod 102, handle insert 104 and an external shell 110, the length of pin 10 is relatively lesser than e.g., diameter of handle insert 104 at section A-A. In an exemplary embodiment, the dimensions or the shape of socket 106, to the extent it is present in external shell 110, is different vis-à-vis the dimensions or the shape of socket 106 at metal rod 102 shown in Fig 1a. This is because, the provision of socket 106, to the extent it is provided in external shell 110, is only helpful during the process of assembling assembly 100. For instance, the shape or dimensions of socket 106, to the extent, it is present in external shell 110 could be matching the shape or the dimensions of pin 108 or for instance, roughly cylindrical in shape as shown in Fig 1b.

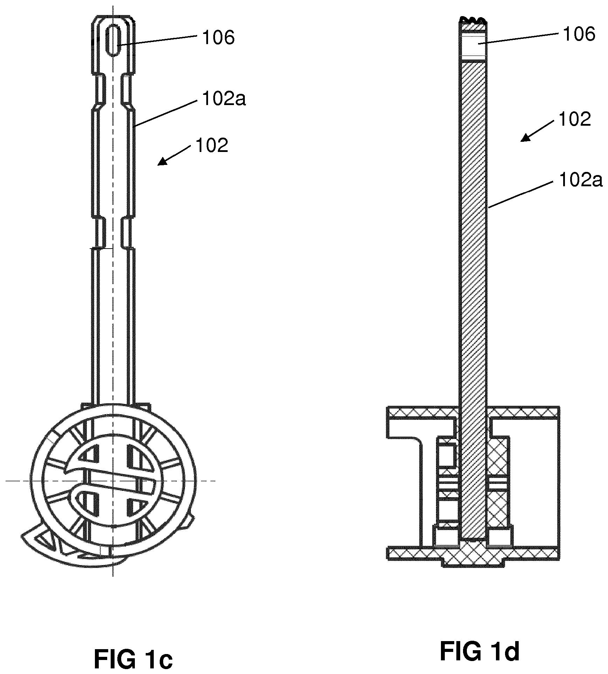

Fig 1c shows metal rod 102 used in conjunction with assembly 100 for the hand brake valve in accordance with an embodiment of the present invention. Fig 1d is cross-sectional view of metal rod 102 shown in conjunction with Fig 1c in accordance with an embodiment of the present invention. The details of metal rod 102 explained in conjunction with Figs 1a and 1b are applicable herewith in reference to figs. 1c and 1d.

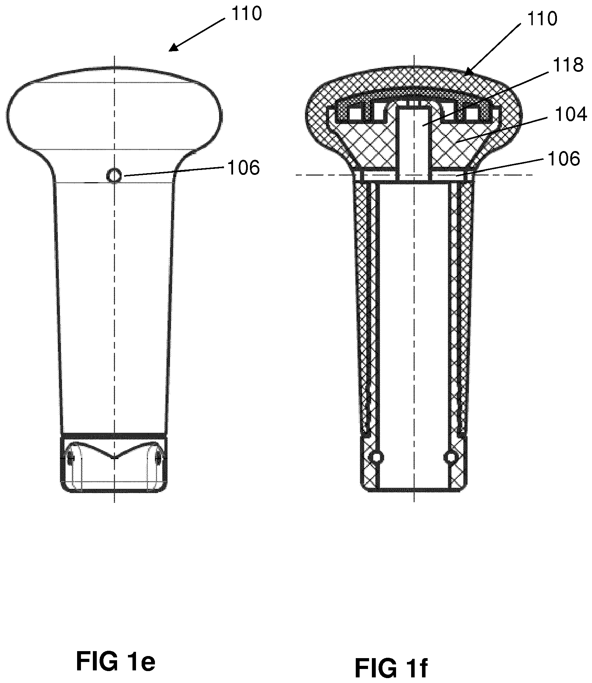

Fig 1e illustrates external shell 110 of assembly 100 for the hand brake valve in accordance with an embodiment of the present invention. Fig 1f is a cross-sectional view of external shell 110 illustrated in Fig 1e in accordance with an embodiment of the present invention. It is noted herewith that the features of external shell 110 explained above in reference to other figures and/or embodiments is applicable here.

In accordance with one or more embodiments of the present invention, external shell 110 is positively coupled to handle insert 104, wherein external shell 110 encloses handle insert 104 at least partially. Socket 106, for instance, extends through external shell 110, and to extent socket 106 extends through external shell 110, socket 106 is shaped to at least approximately match the shape of pin 108. In accordance with the present embodiment, socket 106 extending through external shell 110 is configured to facilitate introduction of pin 108 during an assembly process of hand brake assembly 100.

Further, external shell 110 is positively coupled to handle insert 104 such that there is no relative rotational movement (see 'R' in Fig 1b to understand what is meant by the term 'rotational') possible between external shell 110 and handle insert 104.

In the same embodiment, external shell 110 and handle insert 104 are configured to undergo a predetermined or a limited rectilinear movement in relation to metal rod 102 in a direction parallel to a vertical axis 'Y'. This is, for instance, enabled by presence of accommodating slot 118 in handle insert 104 as shown in Fig 1f. The shape of accommodating slot 118 enables the positively assembled external shell 110 and 104 to be able to undergo the rectilinear movement above metal rod 102. More particularly, the shape of accommodating slot 118 in insert 104 is designed in such a manner that at least partially matches with the external shape of metal rod 102.

Fig 2a shows a cross-sectional view of another assembly 200 for a hand brake valve in accordance with another embodiment of the present invention. Assembly 200 could be considered as an alternative embodiment of assembly 100 for the hand brake valve. The primary difference lies between the two embodiments in terms of structural means 100a and structural means 200a.

The functioning of assembly 200 will be described below.

As already mentioned, while there are differences between structural means 100a and 200a, they both are however configured to prevent any rotational movement (see 'R' in Fig 2b) between the handle insert (104 or 204) and at least the metal rod (102 or 202). Furthermore, both structural means 100a and 200a are further configured to allow a rectilinear movement of the handle insert (104; 204) in relation to at least the metal rod (102; 202). See 'RL' in Fig 2a to understand what is meant by 'rectilinear'; such movement is parallel to axis 'Y' which also labeled in the same figure.

Since structural means 100a has been explained in detail already above, focus is shifted to means 200a as shown in Fig 2a in which the implementation is different vis-à-vis structural means 100a. In the present embodiment, in order to prevent a relative rotation (see 'R' in Fig 2b) between metal rod 202 and a combination of handle insert 204 and external shell 210, a bush 206 is provided. In other words, means 200a includes bush 206. Bush 206 has an internal surface matching the dimensions of non-circular external surface 202a of the metal rod 202. In one embodiment, bush 206 is made of metal based material, and wherein handle insert 204 is overmolded to bush 206. In the same or different embodiment, handle insert 204 is made of plastic based material.

Furthermore, external shell 210 associated with the present embodiment is provided with an internal surface 204s that is different from that of external shell 110 as disclosed in Figs 1a, 1b, 1e, and 1f of the present application. Furthermore, external shell 210 does not include any socket 106.

In accordance with the present embodiment, bush 206 of means 200a is snugly fit to metal rod 202 such that it not only prevents any relative rotation (see 'R' in Fig 2b) between metal rod 202 and a combination of handle insert 204 and external shell 210, but also enables, for instance, allow a rectilinear movement of at least handle insert 204 (or a combination of handle insert 204 and external shell 210) in relation to at least metal rod 202.

Fig 2b is a cut section (A-A) of assembly 200 for the hand brake valve explained in conjunction with Fig 2a in accordance with another embodiment of the present invention.

The cut section of assembly 200 displayed in Fig 2b shows, for instance, how bush 206 is assembled to metal rod 202. As already mentioned in reference to Fig 2a, handle insert 204 is overmolded to bush 206. Further, a snug fit exists between bush 206 and metal rod 202. In the present embodiment, bush 206 is made of metal. Due to metal - to-metal contact between bush 206 and metal rod 202, the wear and tear caused as a result of established contact between two components may be negligible. This prolongs the life of components in assembly 200 for the hand brake valve. A skilled person would also recognize that due to matching or snugly fit internal surfaces between bush 206 and metal rod 202, the rectilinear movement (limited or otherwise) between bush 206 and at least handle insert 204 is not blocked. Thus, as mentioned above, the technical advantage of using bush 206 is that it not only prevents any relative rotation (see 'R' in Fig 2b to understand what is meant with the term 'rotation') between metal rod 202 and a combination of handle insert 204 and external shell 210, but also enables, for instance, allow a rectilinear movement of at least handle insert 204 (or a combination of handle insert 204 and external shell 210) in relation to at least metal rod 202.

Finally, it is also noted that, optionally, metal rod 102 or 202 may be provide with a work transmitting element 112. Said element 112 surrounds a portion of non-circular external surface 102a or 202a of metal rod 102 or 202 at its bottom portion ('bottom' relative to surface 104s or 204s of shell 110 or 210 - see Figs 1a and 2a). For instance, element 112 may be configured to transmit force or work generated during the rectilinear movement (RL) transferred by operator the hand brake valve or specifically assembly 100 or 200 through e.g., a combination of external shell 110 or 210 and insert 104 or 204. Further, said element 112 is configured to transmit force or work during the mentioned rectilinear movement to further components (not shown) of the hand brake valve underneath slot 116. Slot 116 in Figs. 1a and 2a shows where metal rod 102 or 202 is disposed and optionally in one or more embodiments, said slot 116 provides space and room for movement of metal rod 102 or 202 in a direction perpendicular to axis 'Y'. In accordance with one or more embodiments, assembly 100 or 200 for the hand brake valve includes a spring 114 surrounding rod 102 or 202 to facilitate the rectilinear movement and/or facilitate user feedback of the rectilinear movement initiated by the user of the hand brake valve.

### REFERENCE SIGNS (PART OF THE DESCRIPTION)

100, 200 - an assembly for a hand brake valve
100a, 200a -structural means
102, 202 - metal rod
102a, 202a - non-circular external surface of metal rod 102, 202
104, 204 - handle insert
104s, 204s - internal surface of handle insert 104, 204
106 - socket
108 - pin
110, 210 - external shell
112 - a work transmitting element
114- spring
116 -slot or track
118 - accommodating slot for metal rod 102, 202
206 -bush, preferably made of metal
A-A - a reference cut-section plane of assembly 100 - the view of assembly 100 at said cut-section plane is shown in Fig 1a
RL - direction or orientation of the rectilinear movement
R - orientation of rotational movement between e.g., metal rod 102a and handle insert 104
U - direction or orientation of the term 'upward' or 'up'
D - direction or orientation of the term 'downward' or 'down' g - gap
I - length of pin 108
d - diameter of handle insert 104 at cut-section plane A-A
Y - longitudinal axis

## Claims

1. An assembly (100; 200) for a hand brake valve, comprising
a metal rod (102; 202) with a non-circular external surface (102a; 202a);
a handle insert (104; 204) at least partially surrounding the non-circular external surface (102a; 202a) of the metal rod (102; 202), and,
wherein the assembly (100; 200) further comprises structural means (100a; 200a) that is configured to prevent any rotational movement between the handle insert (104; 204) and at least the metal rod (102; 202), **characterized in that**, the structural means (100a; 200a) is further configured to allow a rectilinear movement of the handle insert (104; 204) in relation to at least the metal rod (102; 202), **in that** the assembly (100; 200) further comprises an external shell (110; 210) which is positively coupled to the handle insert (104; 204), wherein the external shell (110; 210) encloses at least partially the handle insert (104 204), and **in that** the external shell (110; 210) is positively coupled to the handle insert (104; 204) such that there is no relative rotational movement possible between the external shell (110; 210) and the handle insert (104; 204).

2. The assembly (100) of claim 1, wherein the structural means (100a) comprises a pin (108), and
a socket (106) for receiving the pin (108).

3. The assembly (100) of claim 2, wherein the socket (106) extends completely through the metal rod (102) and the handle insert (104), and to the extent the socket (106) extends completely through the metal rod (102) and the handle insert (104), the socket (106) is longitudinally arranged such that the pin (108) is capable of vertically sliding in a direction parallel to a vertical axis 'Y' within the socket (106).

4. The assembly (100) of any one of claims 2 and 3, wherein the pin (108) is in physical contact with at least the metal rod (102) and the handle insert (104) and wherein the pin (108) has a length that is lesser than an external diameter at a cross-sectional portion (A-A) of the handle insert (104).

5. The assembly (200) of claim 1, wherein the structural means (200a) comprises a bush (206) that has an internal surface matching the dimensions of the non-circular external surface (202a) of the metal rod (202).

6. The assembly (200) of claim 5, wherein the bush (206) is made of metal based material, and wherein the handle insert (204) is overmolded to the bush (206).

7. The assembly (100) of claim 1 and any one of claims 2 to 4, wherein the socket (106) extends through the external shell (110), and to the extent the socket (106) extends through the external shell (110), the socket (106) is shaped to at least approximately match the shape of the pin (108).

8. The assembly (100) of claim 1, wherein the socket (106) extending through the external shell (110) is configured to facilitate introduction of the pin (108) during an assembly process of the hand brake assembly (100).

9. The assembly (100; 200) of claim 1, wherein the external shell (110; 210) and the handle insert (104; 204) are configured to undergo a predetermined or a limited rectilinear movement in relation to the metal rod (102; 202) in a direction parallel to a vertical axis 'Y'.

10. Use of the assembly (100; 200) for the hand brake valve in accordance with any one of the above claims in vehicles, in particular trucks, for applying parking brakes.

## Patentansprüche

1. Anordnung (100; 200) für ein Handbremsventil, die Folgendes umfasst:
eine Metallstange (102; 202) mit einer nicht kreisförmigen Außenfläche (102a; 202a);
einen Griffeinsatz (104; 204), der die nicht kreisförmige Außenfläche (102a; 202a) der Metallstange (102; 202) mindestens teilweise umgibt, und
wobei die Anordnung (100; 200) ferner Strukturmittel (100a; 200a) umfasst, die dazu ausgelegt sind, eine Drehbewegung zwischen dem Griffeinsatz (104; 204) und mindestens der Metallstange (102; 202) zu verhindern, **dadurch gekennzeichnet, dass** die Strukturmittel (100a; 200a) ferner dazu ausgelegt sind, eine geradlinige Bewegung des Griffeinsatzes (104; 204) mit Bezug auf mindestens die Metallstange (102; 202) zu erlauben, dadurch, dass die Anordnung (100; 200) ferner eine äußere Hülse (110; 210) umfasst, die formschlüssig an den Griffeinsatz (104; 204) gekoppelt ist, wobei die äußere Hülse (110; 210) den Griffeinsatz (104; 204) mindestens teilweise umschließt, und dadurch, dass die äußere Hülse (110; 210) formschlüssig an den Griffeinsatz (104; 204) gekoppelt ist, derart, dass zwischen der äußeren Hülse (110; 210) und dem Griffeinsatz (104; 204) keine relative Drehbewegung möglich ist.

2. Anordnung (100) nach Anspruch 1, wobei das Strukturmittel (100a) Folgendes umfasst
einen Stift (108), und
eine Aufnahme (106) zum Aufnehmen des Stifts (108).

3. Anordnung (100) nach Anspruch 2, wobei sich die Aufnahme (106) vollständig durch die Metallstange (102) und den Griffeinsatz (104) erstreckt, und die Aufnahme (106) in dem Maße, in dem sich die Aufnahme (106) vollständig durch die Metallstange (102) und den Griffeinsatz (104) erstreckt, längs derart angeordnet ist, dass der Stift (108) in eine Richtung parallel zu einer vertikalen Achse , Y' vertikal in der Aufnahme (106) gleiten kann.

4. Anordnung (100) nach einem der Ansprüche 2 und 3, wobei der Stift (108) mit mindestens der Metallstange (102) und dem Griffeinsatz (104) in physischem Kontakt ist und wobei der Stift (108) eine Länge aufweist, die kleiner ist als ein Außendurchmesser an einem Querschnittsabschnitt (A-A) des Griffeinsatzes (104).

5. Anordnung (200) nach Anspruch 1, wobei das Strukturmittel (200a) eine Buchse (206) umfasst, die eine Innenfläche aufweist, die mit den Abmessungen der nicht kreisförmigen Außenfläche (202a) der Metallstange (202) übereinstimmt.

6. Anordnung (200) nach Anspruch 5, wobei die Buchse (206) aus einem metallbasierten Material besteht und wobei die Buchse (206) mit dem Griffeinsatz (204) umspritzt ist.

7. Anordnung (100) nach Anspruch 1 und einem der Ansprüche 2 bis 4, wobei sich die Aufnahme (106) durch die äußere Hülse (110) erstreckt und die Aufnahme (106) in dem Maße, in dem sich die Aufnahme (106) durch die äußere Hülse (110) erstreckt, geformt ist, um mindestens ungefähr mit der Form des Stifts (108) übereinzustimmen.

8. Anordnung (100) nach Anspruch 1, wobei die Aufnahme (106), die sich durch die äußere Hülse (110) erstreckt, dazu ausgelegt ist, während eines Montageprozesses der Handbremsanordnung (100) die Einführung des Stifts (108) zu ermöglichen.

9. Anordnung (100; 200) nach Anspruch 1, wobei die äußere Hülse (110; 210) und der Griffeinsatz (104; 204) dazu ausgelegt sind, mit Bezug auf die Metallstange (102; 202) einer vorbestimmten oder einer begrenzten geradlinigen Bewegung in eine Richtung parallel zu einer vertikalen Achse , Y' unterzogen zu werden.

10. Verwendung der Anordnung (100; 200) für das Handbremsventil gemäß einem der obigen Ansprüche in Fahrzeugen, insbesondere LKWs, zum Anziehen von Feststellbremsen.

## Revendications

1. Ensemble (100 ; 200) pour une soupape de frein à main comprenant :
une tige métallique (102 ; 202) avec une surface externe non circulaire (102a ; 202a) ;
un insert de poignée (104 ; 204) entourant au moins partiellement la surface externe non circulaire (102a ; 202a) de la tige métallique (102 ; 202) ; et
dans lequel l'ensemble (100 ; 200) comprend en outre un moyen structurel (100a ; 200a) qui est configuré pour empêcher tout mouvement de rotation entre l'insert de poignée (104 ; 204) et au moins la tige métallique (102 ; 202), **caractérisé en ce que** le moyen structurel (100a ; 200a) est en outre configuré pour permettre un mouvement rectiligne de l'insert de poignée (104 ; 204) par rapport au moins à la tige métallique (102 ; 202), **en ce que** l'ensemble (100; 200) comprend en outre une coque externe (110 ; 210) qui est positivement couplée à l'insert de poignée (104 ; 204), dans lequel la coque externe (110 ; 210) enferme au moins partiellement l'insert de poignée (104 ; 204), et **en ce que** la coque externe (110 ; 210) est positivement couplée à l'insert de poignée (104 ; 204) de sorte qu'aucun mouvement de rotation relatif n'est possible entre la coque externe (110 ; 210) et l'insert de poignée (104 ; 204).

2. Ensemble (100) selon la revendication 1, dans lequel le moyen structurel (100a) comprend
une broche (108), et
une douille (106) pour recevoir la broche (108).

3. Ensemble (100) selon la revendication 2, dans lequel la douille (106) s'étend complètement à travers la tige métallique (102) et l'insert de poignée (104), et dans la mesure où la douille (106) s'étend complètement à travers la tige métallique (102) et l'insert de poignée (104), la douille (106) est longitudinalement agencée de sorte que la broche (108) peut coulisser verticalement dans une direction parallèle à un axe vertical « Y » à l'intérieur de la douille (106).

4. Ensemble (100) selon l'une quelconque des revendications 2 et 3, dans lequel la broche (108) est en contact physique au moins avec la tige métallique (102) et l'insert de poignée (104) et dans lequel la broche (108) a une longueur qui est inférieure à un diamètre externe au niveau d'une partie transversale (A-A) de l'insert de poignée (104).

5. Ensemble (200) selon la revendication 1, dans lequel le moyen structurel (200a) comprend une bague (206) qui a une surface interne correspondant aux dimensions de la surface externe non circulaire (202a) de la tige métallique (202).

6. Ensemble (200) selon la revendication 5, dans lequel la bague (206) est réalisée avec un matériau à base de métal, et dans lequel l' insert de poignée (204) est surmoulé sur la bague (206).

7. Ensemble (100) selon la revendication 1 et l'une quelconque des revendications 2 à 4, dans lequel la douille (106) s'étend à travers la coque externe (110) et dans la mesure où la douille (106) s'étend à travers la coque externe (110), la douille (106) est formée pour correspondre approximativement à la forme de la broche (108).

8. Ensemble (100) selon la revendication 1, dans lequel la douille (106) s'étendant à travers la coque externe (110) est configurée pour faciliter l'introduction de la broche (108) pendant un processus d'assemblage de l'ensemble de frein à main (100) .

9. Ensemble (100 ; 200) selon la revendication 1, dans lequel la coque externe (110 ; 210) et l'insert de poignée (104 ; 204) sont configurés pour subir un mouvement rectiligne prédéterminé ou limité par rapport à la tige métallique (102 ; 202) dans une direction parallèle à un axe vertical « Y ».

10. Utilisation de l'ensemble (100 ; 200) pour la soupape de frein à main selon l'une quelconque des revendications cidessus sur des véhicules, en particulier des camions, pour appliquer les freins de stationnement.
